# EUROPEAN PATENT SPECIFICATION

(11) **EP 4 172 396 B1**
(45) Date of publication and mention of the grant of the patent: **10.04.2024**
(21) Application number: 21745518.7
(22) Date of filing: 24.06.2021
(51) Int. Cl.: D04H 1/435, D04H 1/4291, D04H 1/4382, D04H 1/56, D04H 3/011, D04H 3/016, D04H 3/16, B01D 39/16, A62B 23/02

(54) **POLYESTER/POLY(METHYL METHACRYLATE) ARTICLES AND METHODS TO MAKE THEM**
POLYESTER/POLY(METHYLMETHACRYLAT)-GEGENSTÄNDE UND VERFAHREN ZU IHRER HERSTELLUNG
ARTICLES DE POLYESTER/POLY(MÉTHACRYLATE DE MÉTHYLE) ET LEURS PROCÉDÉS DE FABRICATION

(30) Priority: 26.06.2020 US 202063044637 P; 20.11.2020 US 202063116512 P
(43) Date of publication of application: 03.05.2023
(73) Proprietor: Jabil Inc., St. Petersburg, Florida 33716 (US)
(72) Inventor: RODGERS, Luke, St. Petersburg, Florida 33716 (US); FRY, Thomas, St. Petersburg, Florida 33716 (US)
(74) Representative: Gulde & Partner
(86) International application number: PCT/US2021/038889
(87) International publication number: WO 2021/262974

(56) References cited:
- EP-A1- 1 609 819
- EP-A1- 1 785 453
- EP-A1- 3 476 455
- WO-A1-2004/059058
- WO-A1-2017/196176
- US-A1- 2006 079 145
- US-A1- 2017 088 709
- EGUIBURU J L ET AL: "Blends of amorphous and crystalline polylactides with poly(methyl methacrylate) and poly(methyl acrylate): a miscibility study", POLYMER, ELSEVIER SCIENCE PUBLISHERS B.V, GB, vol. 39, no. 26, 1 December 1998 (1998-12-01), pages 6891-6897, XP004138379, ISSN: 0032-3861, DOI: 10.1016/S0032-3861(98)00182-7

## Description

### Field of the Disclosure

The present disclosure relates to articles comprised of polyesters/poly(methyl methacrylate) polymer blends. In particular, the invention relates to nonwoven filters comprised of polylactic acid/poly(methyl methacrylate) polymer blends.

### BACKGROUND

Conventional filters have been made from many polymers such as polypropylene, polyethylene, polyester, polyamide, polyvinyl chloride, and poly(methyl methacrylate). The filters typically are made by a melt blown process forming a nonwoven fabric having substantially nonuniform length and diameter fibers with globules of pooled polymer causing a less than desired pressure drop across the filter for many applications.

Conventional filters lack an electrostatic charge and filter by impingement, impactions and diffusion. Electrostatic charge has been applied to improve the filtration performance of conventional filters. The charge causes the filter media to electrostatically attract small air borne particles and enhance the attachment of the particles to the media surface, thus improving efficiency of the filter.

Unfortunately, the electrostatic charge is known to dissipate with time and with the application of heat lowering the performance of the filters. To remedy the problem, charge enhancing additives such as fatty acid stearates or amides have been added to the polymers used to make the filters (see US Pat. Publ. US20060079145). These, however, may affect the processing and fibers formed as well as potentially cause allergic reactions for applications that contact skin.

WO 2004/059058 A1 describes nonwovens such as meltblowns, produced from polylactic acid and intended for filter applications.

Accordingly, it would be desirable to provide a polymer and filter that overcomes one or more problems of the filtration art such as described above and, in particular, to filter applications that may come in contact with human skin (e.g., masks).

### SUMMARY OF THE INVENTION

The present invention is defined by the appended claims.

An aspect of the disclosure is the discovery that particular blends of PLA/PMMA may be melt blended, sheared and rapidly cooled to form articles such as nonwoven fabrics that display excellent ability to be charged enabling excellent filtration of particulates as well as retain the surface charge and maintain filtration efficiency. Thus, this aspect of the disclosure is a polymeric composition of poly(methyl methacrylate) and polylactic acid having a surface charge potential of at least about 50 electron volts in the absence of any other charge enhancing component or any other additive. In particular, the composition surprisingly retains at least 90% of said charge even when exposed to high heat (70°C) for an hour to 24 hours.

An aspect of the invention is that PMMA/PLA blends may be formed into particularly useful non-woven fabrics useful for filtration applications. The melt blown fabrics with long uniform diameter fibers without the defects observed in commercial polypropylene melt blown fabrics made for similar uses. This aspect is a method of producing a non-woven material comprising: providing a feed mixture comprising polymethyl methacrylate and polylactic acid to a melt blown extrusion device; liquefying the feed mixture in the extrusion device to form a liquified feed mixture; blowing the liquified feed mixture through at least one nozzle to form a spray; depositing the spray on a surface; e) reducing a temperature of the spray such that the spray solidifies on the surface to form a sheet of non-woven material.

Another aspect of the disclosure is a method of forming a polymeric composition comprising: (i) melting and blending polylactic acid and poly(methyl methacrylate) to form a melt blend, (ii) extruding the melt blend through a die to form a shaped article and (iii) cooling the shaped article at a cooling rate through Tg of the polylactic acid such that a microstructure is formed that may be charged to surface potential of at least 50, 100, 200, 500 or 1000 electron volts. This aspect may be performed in a manner using the method in the previous aspect.

A further aspect of the invention is a filter comprising at least one layer of a nonwoven fabric comprised of fibers of poly(methyl methacrylate) and polylactic acid that have a diameter of about 0.1 micrometer to 15 micrometers. In a particular embodiment the filter fibers are from about 0.5 or 1 micrometer to 15 micrometers with an average diameter of about 2 to 6 micrometers.

### BRIEF DESCRIPTION OF THE DRAWINGS

The disclosed non-limiting embodiments are discussed in relation to the drawings appended hereto and forming part hereof, wherein like numerals indicate like elements, and in which:
FIG. 1 shows an exemplary melt blown extrusion system.
FIG. 2 shows a face mask apparatus.
FIG. 3 shows a scanning electron microscope image of a PMMA/PLA filter of this invention.
FIG. 4 shows a scanning electron microscope image of a PMMA/PLA filter of this invention.
FIG. 5 shows a scanning electron microscope image of a PMMA/PLA filter of this invention.
FIG. 6 shows a scanning electron microscope image of a PMMA/PLA filter of this invention.
FIG. 7 shows a scanning electron microscope image of a PMMA/PLA filter of this invention.
FIG. 8 shows a scanning electron microscope image of a PMMA/PLA filter of this invention.
FIG. 9 shows a scanning electron microscope image of a PMMA/PLA filter of this invention.
FIG. 10 shows a scanning electron micrograph of a commercial polypropylene melt blown filter.

### DETAILED DESCRIPTION

Non-woven materials useful as filters or masks may be produced from numerous materials, which may include one or more of the following: polymers, polymer blends, shape memory materials, shape memory polymers, and shape memory polymer blends.

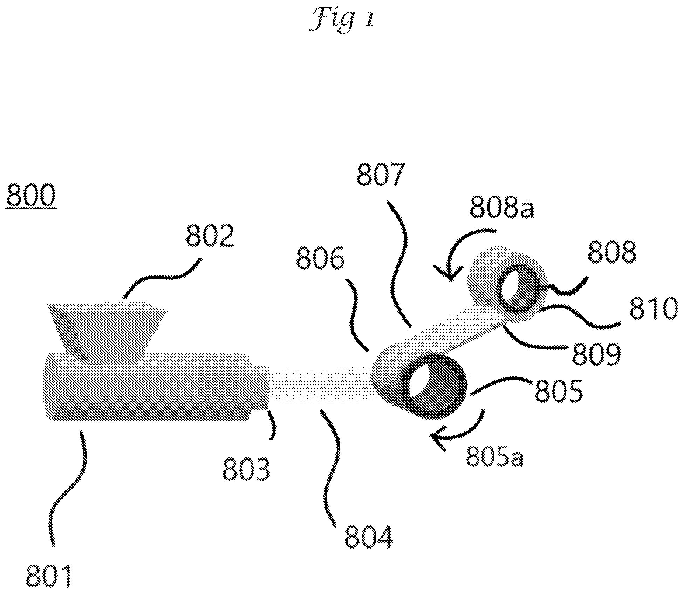

Nonwoven fabrics useful to make filters and masks may be made by melt blowing. A blended polymer composition comprising poly(methyl methacrylate) (PMMA) and polylactic acid (PLA) may be melt blown. The blend of PMMA (30% w/w) and PLA (70% w/w) is fed to a melt blown extrusion machine, such as the one shown in Figure 1. Figure 1 shows an exemplary melt blown extrusion system **800.** An extruder 801 receives a PMMA/PLA feed material (or other material) from hopper **802,** liquefies the feed material, and blows/sprays the liquefied feed material through nozzle openings **803.** High velocity air (not shown) may be used to assist in blowing/spraying the liquefied feed material through nozzle openings **803.** The blown material **804** travels through air and is deposited on a rotating cylindrical surface **805,** which is shown to be rotating in the direction shown by the arrow **805a.** When the blown material **804** is deposited onto the rotating cylindrical surface **805** at location **806,** it cools and becomes solid. A solid sheet/film **807** is pulled by a second rotating cylinder **808** that is rotating in the direction shown by the arrow **808a.** Newly added sheet/film material is added at **809** onto a spool of melt blown polymer **810.**

The PMMA/PLA blend is then extruded and blown in a system such as the system in Figure 1 to form a non-woven fabric sheet that can be used in face masks.

The polymeric composition typically is comprised of about 15% to about 85% PMMA with the balance being PLA. Desirably the composition is comprised of at most about 50% of PMMA. The PLA may be any form of PLA such as those formed using L-lactide, D-lactide, or combination thereof. Desirably, the amount of L-lactide is at least 50%, 60%, 70%, 80% or 90% to 98% or 100% (100% may include trace amounts of D-lactide) by weight of the monomer used to make the PLA. Other polyesters such as those known in the art that readily form crystalline or semi-crystalline polymers may also be used.

The PLA or polyester may have any Mw to realize a blend with the PMMA that has the desired melt flow rate. Typically, the PLA has a weight average molecular weight (Mw) of about 10 kDa to 500 kDa. The melt flow rate of the PLA or polyester may be any useful to form the articles herein such as the nonwoven fabrics. Typically, the MFR is one when combined with the PMMA realizes the desired fiber diameters and lengths as described herein. Generally, the MFRs may be from 25, 50, 60 or 70 to 90, 100, 125 or 150 grams (210°C/10 min, 2.16kg). Examples of suitable PLAs are available under the tradename INGEO Biopolymer 625F and 3260HP from NatureWorks LLC and LUMINY L105 from Total Corbion PLA.

The PMMA may be any suitable PMMA such as those known in the art and may have a Mw that varies over a wide range such as from 10kDa to 3MDa so long as the PMMA exhibits rheological behavior allowing for the rapid shear and quenching while still realizing the desired degree of crystallinity and charge capability of the PLA/PMMA blend. The PMMA may be made with a small percentage (e.g., less than about 5%, 2%, or 1%) of comonomers such as those commonly used in the art (e.g., methyl acrylate, butyl acrylate and the like) to improve one or more properties such as impact strength or heat stability. The melt flow rate of the PMMA may be any useful MFR to form the articles herein such as the nonwoven fabrics. Typically, the MFR of the PMMA is one, when combined with the PLA, that realizes the desired fiber diameters and lengths as described herein. Generally, the MFR of the PMMA may be from 1, 2, 5, or 10 to 100, 50, 40 or 30 grams (230°C/10 min, 3.8kg). Examples of PMMAs that may be useful include those available under the tradename designation CA41 from PLASKOLITE and those available under the tradename PLEXIGLAS VM, VS and VSUVT from Arkema.

It has been discovered, surprisingly, that the polymeric composition that is formed under sufficient shear and cooling through the crystallization melt temperature, in the absence of charge enhancing additives, allows for the charging of the composition to high surface potentials. This is believed, without being limiting in any way, to be due to the microstructure that is formed which may be comprised of smaller crystalline grains with greater defects and grain boundaries than previous compositions, for example, of melt blown nonwoven fibers (exposed to adequate shear and cooling). The surface charge of the polymeric composition may be at least 50, 100, 200, 500 or even 1000 electron volts. The surface charge may be measured by commercially available devices such as described in US5401446, col 8, lines 6 to 21.

Surprisingly, the PLA crystallizes when blended with amorphous (PMMA) even when sheared at high rates and rapidly cooled through the melt crystallization temperature of the PLA or polyester. The degree of crystallinity by volume is from the amount of PLA that crystallizes during the method described herein. Typically, the amount of PLA that crystallizes is from about 1%, 2%, 5% or 10% to about 50%, 40% or 30%. Thus, the degree of crystallinity of the blend when 50% of the PLA crystallizes in a 70% PLA/30% PMMA blend would give about 35% degree of crystallinity for the blend.

The charging of the surface may be accomplished by any known method of charging filters and the like such as described in U.S. Pat. and Pat. Publ.: US2740184; US4215682; US4375718; US4588537; US4592815; US4904174; 5122048; US5401446; and US2006/0079145. The charging voltage may be any voltage useful to impart the charge to the filter. Illustratively, the charging voltage may be from about 2kV to 50kV.

In an embodiment, the article is a filter comprising at least one layer of a nonwoven fabric comprised of fibers of poly(methyl methacrylate) and polylactic acid that have a diameter of about 1 micrometer to 15 micrometers and average diameter of about 2 to 6 micrometers. The filter desirably has at least about 90%, 95%, 99% or more by number of the fibers being longer than 500 micrometers, 1 millimeter or 2 millimeters. The filter nonwoven fabric surprisingly may have a low fabric weight and even when a higher fabric weight is used the filter may have a low pressure drop. The fabric weight may be for example 25, 50, or 100 to 300 or 200 grams/m². The filter typically has pressure drop of at most about 5 mm Hg (666 Pa) 4mm Hg (533 Pa), 2 mm Hg (266 Pa) or 1 mm Hg (133 Pa) even, for example, when the fabric weight is greater than 50 to 300 grams/m² or multiple layers are used (layer being a separate discreet fabric sheet for example). One or more layers may be used to make the filter. The filter typically also may have an efficiency of at least 95% or 98%. The filter because of the microstructure as described herein retains the surface charge potential even when heated. For example, the surface potential, typically decays at most about 10% after exposure to 70°C for one hour with essentially no loss in efficiency or less than 5%, 3%, 2%, or 1% loss in efficiency after such heating.

In the method of forming a fibrous article of the polymeric composition (e.g., melt blowing process) it is desirable for the PMMA/PLA blend to have a viscosity at 200°C that allows for the production of fibers having a diameter of 1 to 15 micrometers with an average diameter of about 2 or 3 to 8, 7 or 6 micrometers. Typically, the MFR of the polymer blend of PLA and PMMA is 20 or 30 to 90 or 80 grams (210°C/10 min, 2.16kg). The diameter may be determined by measuring the diameter of a number of fibers (~100) on one or more micrographs of the nonwoven fabric utilizing known image analysis techniques or by hand.

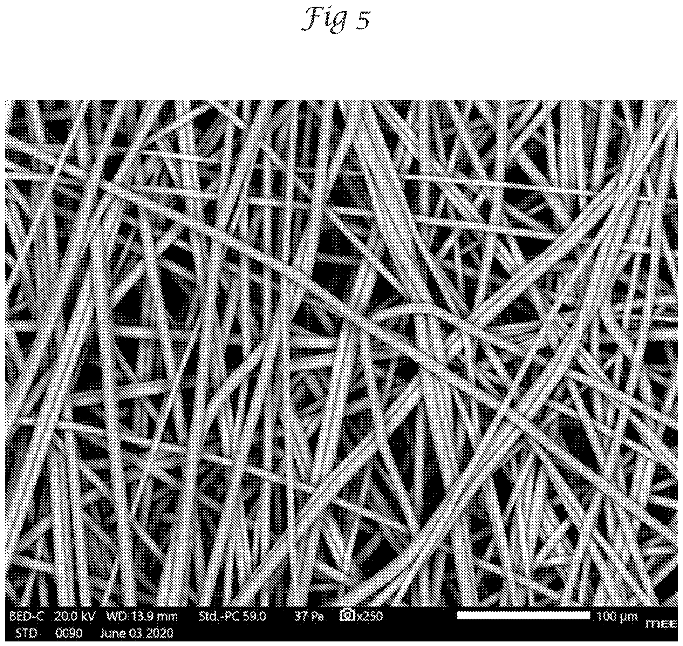

It has been discovered that ultra-high efficiency, the fabric, typically non-woven, may be comprised of fiber diameters all less than 1 micrometer to about 0.05 micrometer, with the lengths as described above. For both this embodiment and the embodiment described in the prior paragraph, the diameter along the length of the fibers display surprisingly good uniformity, which is readily apparent in Figure 5. Typically the fiber has a diameter that has standard deviation from the mean of about 20%, 10% or even 5%, which may be determined by measuring about 50 fibers at 5 to 10 equidistant points from one end to the other end along the fiber length in a 100X micrograph and may utilize known image analysis techniques.

When forming a shaped article such as a filter element, the PLA/PMMA are melt blended and extruded through a die, typically forming a fibrous sheet or fabric, which may be woven or nonwoven. The shear rate through the die should be sufficient to realize the desired microstructure and surface charging potential. Typically, the shear rate is at least 10, 100, 250, 500 or 750 1/s to 5000, 4000 or 3500 1/s. Likewise, cooling rate through crystallization melt temperature of the polylactic acid or polyester (typically from about 140°C to 180°C) is sufficiently rapid such that the desired microstructure is formed allowing for the surface charge potential to be realized upon charging of the filter element formed by the process. Typically, the cooling rate is 10, 50, 100, 1000°C/min to 5000 °C/sec, 4000 °C/sec or 3500°C/sec, which is typically from about the melt temperature of the polymer blend to about 100°C.

Illustratively, when forming a melt blown nonwoven fabric, the melt pump temperature is above the melt point of the PLA/PMMA polymers to melt blend them and typically is from about 175 to 250°C. The die temperature is generally slightly higher than the melt pump temperature (i.e., 10% or 20% higher). For example, if the melt pump temperature is 200°C then the die temperature may be from about 220 to 250°C. To ensure a desired cooling rate to realize the desired microstructure the air temperature from the exiting of the die to impingment on the collection rolling is typically set to at least about 1.3, 1.5, 1.8 or even 1.9 times greater than the melt pump temperature or die temperature, with it being understood that the air cools somewhat upon being blown from the blowing orifice until impingement upon the fiber exiting the die.

Surprisingly, the non-woven fabric comprised of PMMA/PLA) may have an efficiency of 98-99% with only a 2 mm Hg (millimeters of mercury) pressure drop, having the fiber structure described here, which may be made by the melt blown process described herein. Filtering efficiency and pressure drop were measured using a TSI 8130A instrument. An air flow rate of 32 L/min was used for measurements with a salt (NaCl) diameter of 0.1 µm or 0.2 µm. The fabric filter contained 30% w/w PMMA and 70% w/w PLA. The filter material was electrically charged and had a circular shape with a 111 mm diameter. The filter material had a density of 100 grams per square meter (gsm). The PMMA/PLA sheet was thermoformable and exhibited shape memory. That is, the PMMA/PLA sheet can be placed over a fixture and heated to an elevated temperature in order to mold the PMMA/PLA sheet into a desired shape. It may be desirable to heat the PMMA/PLA sheet to a temperature that is approximately equal to, equal to, or above a transition temperature. The transition temperature (to heat to) may be the transition temperature of a polymer that is present in the polymer blend. The transition temperature (to heat to) may be the transition temperature of the polymer with the lowest transition temperature (compared to the other polymers in the polymer blend).

Advantageously, thermoforming a PMMA/PLA polymer blend results in a predefined shape without deforming the fibers. The amount of PMMA in a PMMA/PLA blend may be from 15 to 85% w/w to produce a PMMA/PLA blend that exhibits shape memory properties. Likewise, the amount of PLA in a PMMA/PLA blend may be from 15 to 85% w/w to produce a PMMA/PLA blend that exhibits shape memory. PMMA/PLA blends having between 15-85% w/w PMMA and having between 15-85% PLA may be used to produce a PMMA/PLA blend that exhibits shape memory properties. The shape memory effect and the moldability of a PMMA/PLA blend may be increased by adding an elastomeric additive, such as an impact modifier. The elastomeric additive, such as an impact modifier, may be added at a concentration of 0 to 25% w/w of the total weight of the mixture. A temperature range of 80 to 85 °C may be used in the heating step to form the polymer blend around a fixture to give it a permanent shape. Alternatively, the polymer blend may be heated and formed to a user's face.

Many materials that are used for producing surgical masks experience deformation of the polymer fibers when heated near their thermoformable temperature. Therefore, many thermoformed masks today have a layer of material that is thermoformable to provide the thermoformability of the product. This inherently results in a multi-layer structure, as opposed to the single layer structure as described herein.

A material that is a moldable thermoform, such as PMMA/PLA, enables a mask to be produced that forms a better seal with the user's face, compared to today's surgical masks. A better fit could be offered to consumers (mask wearers) by offering different sizes and shapes of masks. For example, a face mask that can be thermoformed without altering or deforming the polymer fibers could be molded into small, medium, large, etc. sizes and could be offered in different shapes, such as circular, oval, square, rectangular, etc. to better fit users faces. Custom surgical masks could also be produced by making a mold of an individual's face, fitting the moldable thermoform mask over the mold, and heating the mask material on the mold to give the mask a permanent shape.

It has been discovered that the PLA/PMMA compositions are particularly useful to form thermoformed fabric shapes such as thermoformed masks without deforming the fibers. Typically, a temperature of about 50 to about 100 degrees Celsius may be used to thermoform a shaped fabric such as a filter comprising PMMA and PLA. A heated (and softened) mask can be pressed to a user's face and as cools it forms to the contours of the user's face. The thermoformed mask results in a face mask having a tight seal to the user's face. At least in part, because the fibers do not deform when thermoforming, the shape may be altered and refitted or shaped for another use or the like (reverse thermoformability). Other polymers or polymer blends that exhibit shape-memory and that are capable of filtering may also be used in the disclosed embodiments.

A thermoformable filter material, such as a PMMA/PLA blend described herein, may further include a backing layer to provide strength and support to the filter material. The backing layer may be a polymeric material that includes an adhesive on one side to adhere to the filter material.

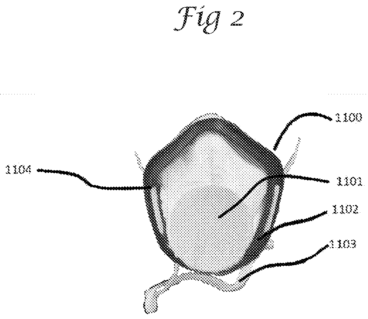

Figure 2 shows a protective face mask **1100** comprising a thermoformable filtering material **1101,** a support **1102,** and a support strap **1103.** The thermoformable filtering material **1101** may comprise a blend of PMMA and PLA. The thermoformable filtering material **1101** may comprise a blend of 30% w/w PMMA and 70% w/w PLA. The thermoformable material **1101** may comprise a blend of 15 to 85% w/w PMMA and 15 to 85% w/w PLA. The thermoformable material **1101** may be produced via melt blown extrusion and may further include an elastomeric additive, such as an impact modifier. The thermoformable material **1101** may exhibit shape memory when heated, shaped, and cooled.

Support **1102** provides structure to the protective face mask **1100** and assists in holding the mask to a user's face. Support **1102** may be a polymer that comprises a rubber elastomer. Support **1102** may be over molded onto the thermoformable material **1101.** Alternatively, support **1102** may be a functional sealant that adheres to the thermoformable material **1101** and provides rigidity to the mask when cured. Support **1102** may be a functional sealant that comprises or consists of silicone.

Support strap **1103** may be an elastic strap and functions to hold the support **1102** and the thermoformable material **1101** to a user's face. Alternatively, support strap **1103** may be made of a non-elastomeric material. Support strap(s) **1103** may be slid through apertures (holes/openings) **1104** that are present in the support **1102,** as shown in Figure 2.

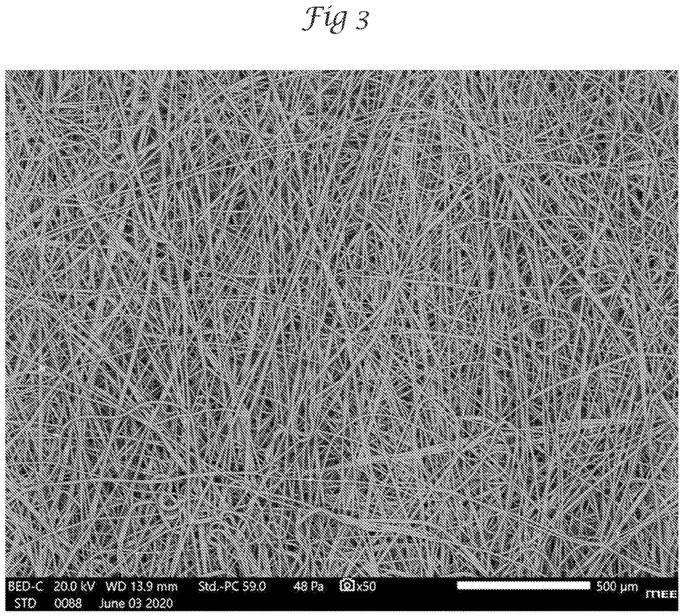

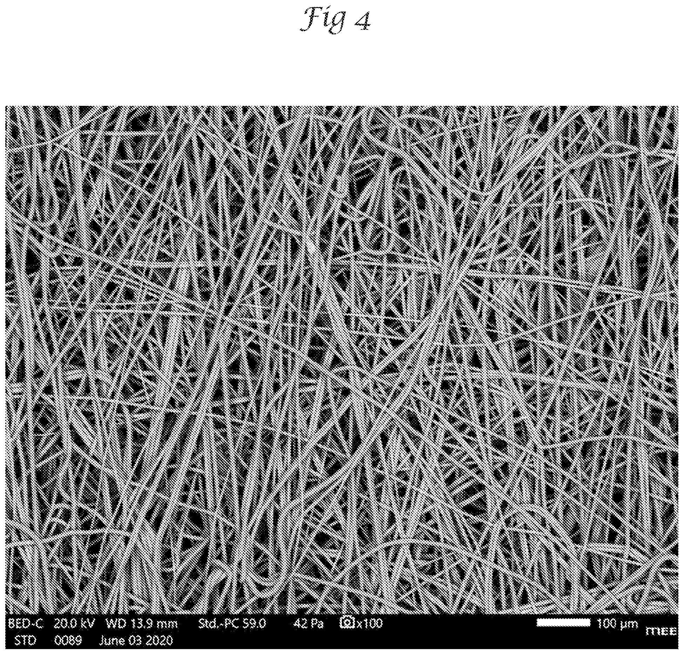

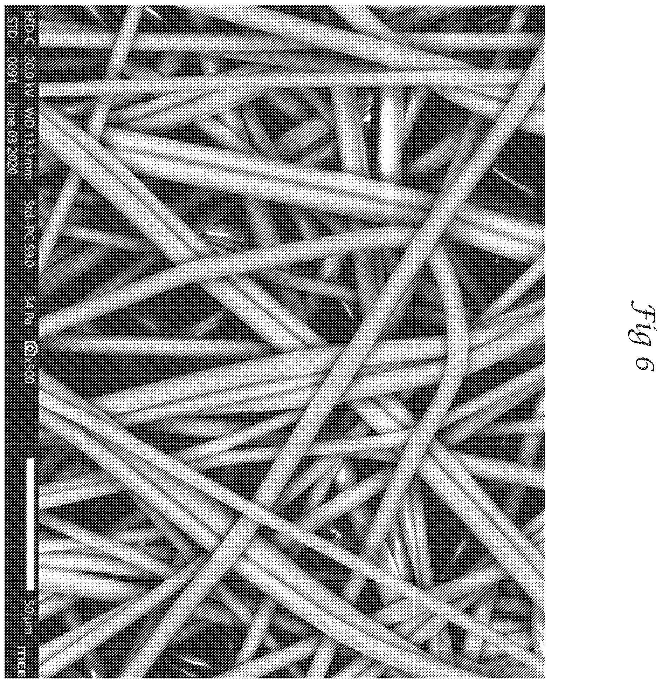

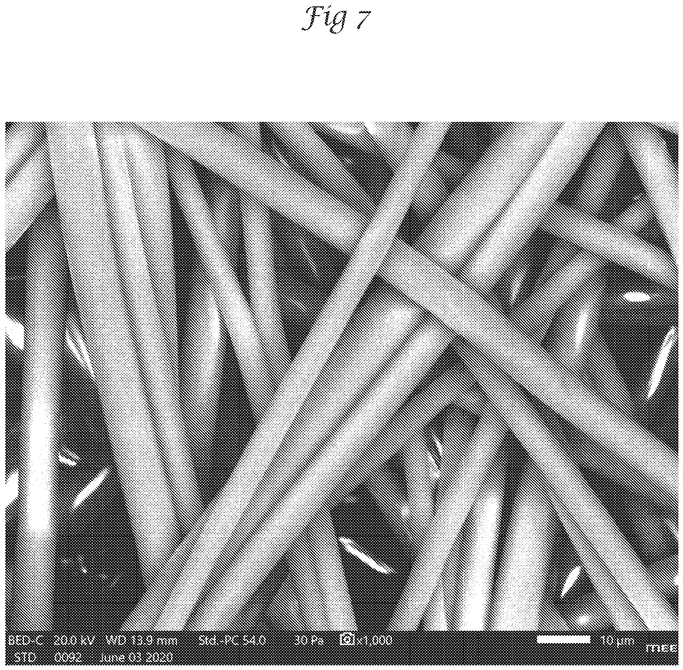

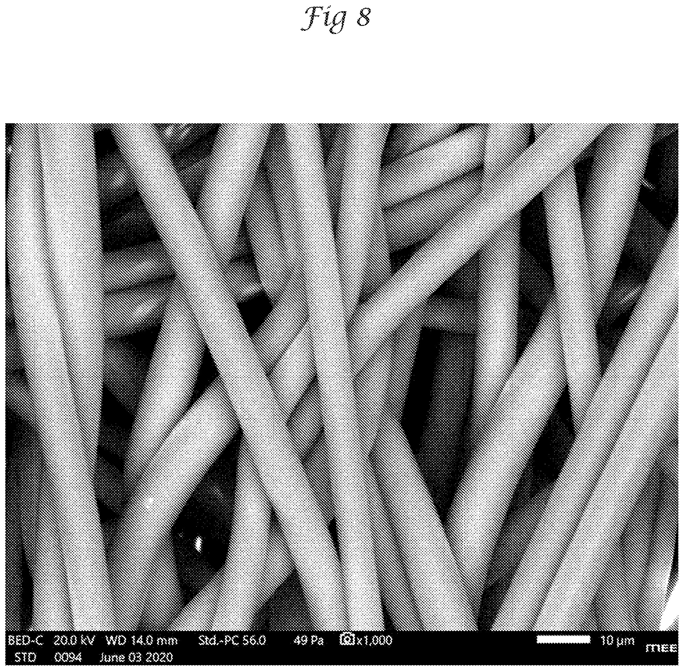

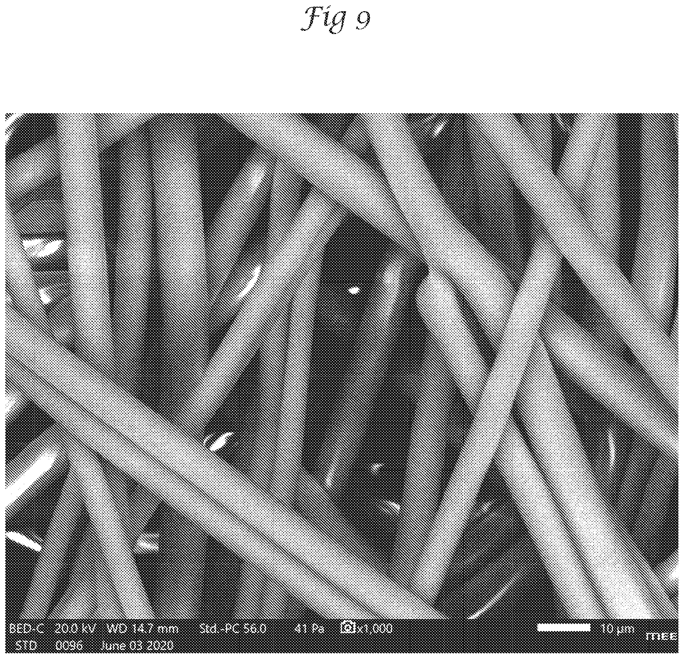

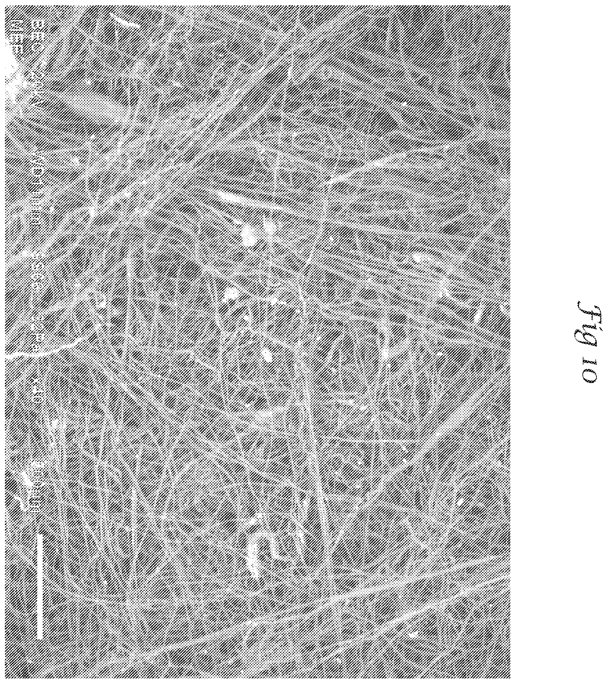

Figures 3 through 9 show scanning electron microscope (SEM) micrographs of a melt blown PMMA/PLA fabric useful for a filter. As shown in Figures 3 through 9, the fibers in the PMMA/PLA blend maintain their individual shape and are not deformed. This contrasts with, for example, some polypropylene fabrics that are used in mask applications. In these fabrics (see Figure 10, which is an SEM micrograph of a commercially available polypropylene mask produced by melt blowing), one can visually observe fibers (using SEM) that are deformed. The deformation in these polypropylene mask fabrics may appear as parallel fibers melting into one another to form a larger fiber. It may also appear as an individual fiber branching off along the fiber's backbone (i.e., fray along the fiber length). The deformation may also appear as globules of pooled polymer.

### Examples

Nonwoven fabric filters are made by melt blowing through a die having a 200 micrometer diameter orifice. The composition is 70% by weight PLA (INGEO Biopolymer 625F) and 30% by weight PMMA (PLASKOLITE CA41), unless otherwise noted in Table 1. The melt extruder temperature is from about 230 to 250°C, the die temperature was set at 200°C and the blowing air set temperature is 380°C and air pressure is 40 pounds per square inch. The collector distance is as noted in Table 1. The filters were tested with salt particles in a similar manner as described in US20060079145 (para. 28) except that the salt size was 0.1 and 0.2 micrometer as shown in Table 1 and as described herein. The Comparative Examples are made in the same way except that a charge enhancing additive was added or the fabric was made with polypropylene as also noted in Table 1.

From Table 1, it is readily apparent that the filters of the invention when charged have a greater efficiency for a given pressure drop compared to polypropylene typically used for such filters. (see Examples 6 and 7 versus Comparative Examples 5 and 6). Likewise, it is quite evident that the filters of the present invention have a much lower pressure drop for heavier weight fabrics allowing for more robust breathable filters. Surprisingly, the filters and polymeric composition of the present invention do not require a charge enhancing additive like typical polypropylene filters (see Comparative Examples 1-3). This may be due to the additive deleteriously affecting the desired microstructure.

**Table 1:**

| | Ex. 1 | Ex. 2 | Ex. 3 | Ex. 4 | Ex. 5 | Ex. 6 | Ex. 7 | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|---|---|---|---|---|
| Material | * | * | * | * | * | * | * | # | # | # | PP | PP | PP |
| Filter # of layers | 1 | 1 | 2 | 3 | 1 | 2 | 3 | 1 | 2 | 3 | 1 | 2 | 3 |
| Layer Fabric weight (g/m2) | 95 | 95 | 95 | 95 | 95 | 95 | 95 | 95 | 95 | 95 | 30 | 30 | 30 |
| Applied Charge (kV) | 0 | 40 | 40 | 40 | 40 | 40 | 40 | 40 | 40 | 40 | 40 | 40 | 40 |
| Die Collector distance (inches) | 5 | 5 | 5 | 5 | 6 | 6 | 6 | 5 | 5 | 5 | 5 | 5 | 5 |
| Efficiency (0.1 micron) | 41.2% | 83% | 92.6% | 97.7% | 81.7% | 94.9% | 98.3% | 55.9% | 73.7% | 84.0% | 84.7% | 94.9% | 98.9% |
| Efficiency (0.2 micron) | 28.5 | 85.9% | 95.4% | 99.3% | 85.9% | 97.5% | 99.5% | 53.4% | 73.7% | 86.5% | 88.0% | 97.6% | 99.7% |
| Delta P @ 10cm/s (Pa) | 54.8 | 53.3 | 77.7 | 118.3 | 39.6 | 90.9 | 135.7 | 24.2 | 50.1 | 73.78 | 68.2 | 133.2 | 206.9 |

| | | | | | | | | | | | | | |
|---|---|---|---|---|---|---|---|---|---|---|---|---|---|
| *70% PLA/3 0% PMMA # 70% PLA/30% PMMA + 1% Magnesium Stearate PP - Polypropylene (Exxon Achieve PP6936G2) | | | | | | | | | | | | | |

## Claims

1. A method of producing a non-woven material comprising:
a) providing a feed mixture comprising poly(methyl methacrylate) and polylactic acid to a melt blown extrusion device;
b) liquefying the feed mixture in the extrusion device to form a liquified feed mixture;
c) blowing the liquified feed mixture through at least one nozzle to form a spray;
d) depositing the spray on a surface;
e) reducing a temperature of the spray such that the spray solidifies on the surface to form a sheet of non-woven material comprised of fibers.

2. The method of producing the non-woven material of claim 1 further comprising: forming a filtering mask comprised of filtering layer comprised of the non-woven material.

3. The method of claim 1, wherein the sheet of non-woven material is thermoformable without deforming the fibers of the non-woven material.

4. The method of any one of the preceding claims, further comprising passing the fabric through an electric field.

5. A filter comprising at least one layer of a nonwoven fabric comprised of fibers of poly(methyl methacrylate) and polylactic acid that have a diameter of about 0.5 micrometer to 15 micrometers and average diameter of about 2 to 8 micrometers.

6. The filter of claim 5, wherein at least about 90% by number of the fibers are longer than 500 micrometers.

7. The filter of either claim 5 or 6, wherein the nonwoven fabric has a fabric weight of 50 to 300 grams/m².

8. The filter of claim 7, wherein the nonwoven fabric has a fabric weight of about 100 to 200 grams/m².

9. The filter of any one of claims 5 to 8, wherein the filter has a surface potential of at least about 50 volts.

10. The filter of claim 9, wherein the surface potential decays at most about 5% after exposure to 70°C for one hour.

## Patentansprüche

1. Verfahren zur Herstellung eines Vliesmaterials, umfassend:
a) Bereitstellen eines Einsatzgemisches, umfassend Poly(methylmethacrylat) und Polymilchsäure, zu einer Schmelzblasextrusionsvorrichtung;
b) Schmelzen des Einsatzgemisches in der Extrusionsvorrichtung, um ein geschmolzenes Einsatzgemisch auszubilden;
c) Blasen des geschmolzenen Einsatzgemisches durch mindestens eine Düse, um ein Spray zu bilden;
d) Absetzen des Sprays auf einer Oberfläche;
e) Verringern einer Temperatur des Sprays derart, dass das Spray auf der Oberfläche fest wird, um eine Schicht von aus Fasern gebildetem Vliesmaterial auszubilden.

2. Verfahren zur Herstellung des Vliesmaterials nach Anspruch 1, weiterhin umfassend: Ausbilden einer Filtermaske, gebildet aus einer aus dem Vliesmaterial gebildeten Filterlage.

3. Verfahren nach Anspruch 1, wobei die Vliesmaterialschicht ohne Deformierung der Fasern des Vliesmaterials thermoformbar ist

4. Verfahren nach einem der vorangehenden Ansprüche, weiterhin umfassend Leiten des Stoffs durch ein elektrisches Feld.

5. Filter, umfassend mindestens eine Lage eines Vliesstoffs, gebildet aus Fasern von Poly(methylmethacrylat) und Polymilchsäure, die einen Durchmesser von etwa 0,5 Micrometern bis 15 Micrometern und einen mittleren Durchmesser von etwa 2 bis 8 Mikrometern aufweisen.

6. Filter nach Anspruch 5, wobei mindestens etwa 90 % nach Anzahl der Fasern länger als 500 Micrometer sind.

7. Filter nach einem von Anspruch 5 oder 6, wobei der Vliesstoff ein Stoffgewicht von 50 bis 300 Gramm/m² aufweist.

8. Filter nach Anspruch 7, wobei der Vliesstoff ein Stoffgewicht von etwa 100 bis 200 Gramm/m² aufweist.

9. Filter nach einem der Ansprüche 5 bis 8, wobei der Filter ein Oberflächenpotential von mindestens etwa 50 Volt aufweist

10. Filter nach Anspruch 9, wobei das Oberflächenpotential nach Aussetzen von 70 °C über eine Stunde höchstens 5 % abnimmt.

## Revendications

1. Procédé de production d'un matériau non tissé comprenant :
a) fournir un mélange d'alimentation comprenant du poly(méthacrylate de méthyle) et de l'acide polylactique à un dispositif d'extrusion par fusion-soufflage ;
b) liquéfier le mélange d'alimentation dans le dispositif d'extrusion pour former un mélange d'alimentation liquéfié ;
c) souffler le mélange d'alimentation liquéfié par au moins une buse pour former une pulvérisation ;
d) déposer la pulvérisation sur une surface ;
e) réduire une température de la pulvérisation de telle sorte que la pulvérisation se solidifie sur la surface pour former une feuille de matériau non tissé composée de fibres.

2. Procédé de production du matériau non tissé selon la revendication 1, comprenant en outre : former un masque filtrant composé d'une couche filtrante composée du matériau non tissé.

3. Procédé selon la revendication 1, la feuille de matériau non tissé étant thermoformable sans déformation des fibres du matériau non tissé.

4. Procédé selon l'une quelconque des revendications précédentes, comprenant en outre faire passer le tissu par un champ électrique.

5. Filtre comprenant au moins une couche d'un tissu non tissé composée de fibres de poly(méthacrylate de méthyle) et d'acide polylactique ayant un diamètre d'environ 0,5 micromètre à 15 micromètres et un diamètre moyen d'environ 2 à 8 micromètres.

6. Filtre selon la revendication 5, au moins 90 % du nombre des fibres ayant une longueur supérieure à 500 micromètres.

7. Filtre selon la revendication 5 ou 6, le tissu non tissé ayant un poids de tissu de 50 à 300 grammes/m².

8. Filtre selon la revendication 7, le tissu non tissé ayant un poids de tissu de 100 à 200 grammes/m².

9. Filtre selon l'une quelconque des revendications 5 à 8, le filtre ayant un potentiel de surface d'au moins 50 volts environ.

10. Filtre selon la revendication 9, le potentiel de surface diminuant au maximum de 5 % environ après exposition à 70 °C pendant une heure.
